# EUROPEAN PATENT SPECIFICATION

(11) **EP 2 781 008 B1**
(45) Date of publication and mention of the grant of the patent: **26.09.2018**
(21) Application number: 12801782.9
(22) Date of filing: 14.11.2012
(51) Int. Cl.: H02K 5/00, F16M 1/00

(54) **RECONFIGURABLE MOTOR MOUNT**
REKONFIGURIERBARES MOTORLAGER
SUPPORT DE MOTEUR RECONFIGURABLE

(30) Priority: 15.11.2011 US 201161559786 P
(43) Date of publication of application: 24.09.2014
(73) Proprietor: General Kinematics Corporation, Crystal Lake, IL 60014 (US)
(72) Inventor: STEFFES, Edward, Charles, Jr., Woodstock, IL 60098 (US); MUSSCHOOT, Paul, Marengo, IL 60152 (US)
(74) Representative: Wegner, Hans
(86) International application number: PCT/US2012/064906
(87) International publication number: WO 2013/074555

(56) References cited:
- US-A- 1 786 192
- US-A- 2 456 039
- US-A- 2 595 637
- US-A1- 2003 209 645

## Description

### Background

This patent is directed to a reconfigurable motor mount as defined in the appended claims 1-12.

### Summary

According to the present invention, a motor mount is provided that is reconfigurable between at least a first configuration adapted to accept a first arrangement of fasteners and a second configuration adapted to accept a second arrangement of fasteners, the first and second arrangements of fasteners being different from each other. Furthermore, the motor mount according to the present invention has at least one motor mount foot, and the at least one connection point is defined on the at least one motor mount foot.

According to the present invention, the at least one connection point comprises a recess formed in the at least one motor mount foot and an invertible insert disposed in the recess, the invertible insert having either a first orientation corresponding to the first configuration or a second orientation corresponding to the second configuration.

US 2,595,637 A illustrates a base having four circular discs received in four circular bores, each disc having a slot therethrough for receiving a bolt or screw, thereby providing a limitless number of fastener-receiving configurations.

US 2,456,039 A illustrates a plurality of circular discs with transverse slots that are capable of providing a limitless number of fastener-receiving configurations.

US 1,786,192 A illustrates four blocks that are pivotally and translatably mounted on a base, the blocks providing a limitless number of fastener-receiving configurations.

### Brief Description of the Drawings

It is believed that the disclosure will be more fully understood from the following description taken in conjunction with the accompanying drawings. Some of the figures may have been simplified by the omission of selected elements for the purpose of more clearly showing other elements. Such omissions of elements in some figures are not necessarily indicative of the presence or absence of particular elements in any of the exemplary embodiments, except as may be explicitly delineated in the corresponding written description. None of the drawings are necessarily to scale.
Fig. 1 is a bottom view of a motor incorporating a reconfigurable motor mount having a plurality of reconfigurable feet according to an embodiment of the present disclosure;
Fig. 2 is a top perspective view of an invertible insert used with one of the reconfigurable feet of the reconfigurable motor mount of Fig. 1 according to an embodiment of the present disclosure;
Fig. 3 is a bottom perspective view of the insert illustrated in Fig. 2;
Fig. 4 is a plan view of the insert illustrated in Fig. 2;
Fig. 5 is a side view of the insert illustrated in Fig. 2;
Fig. 6 is a frontal view of the insert illustrated in Fig. 2;
Fig. 7 is a sectional view of the motor mount of Fig. 1, illustrating one of the reconfigurable feet in a first configuration;
Fig. 8 is a bottom view of the motor mount as configured in Fig. 7;
Fig. 9 is a sectional view of Fig. 1, the reconfigurable foot in a second configuration;
Fig. 10 is a bottom view of the motor mount as configured in Fig. 9;
Fig. 11 is a top perspective view of an alternative insert according to the present disclosure;
Fig. 12 is a plan view of the insert illustrated in Fig. 11; and

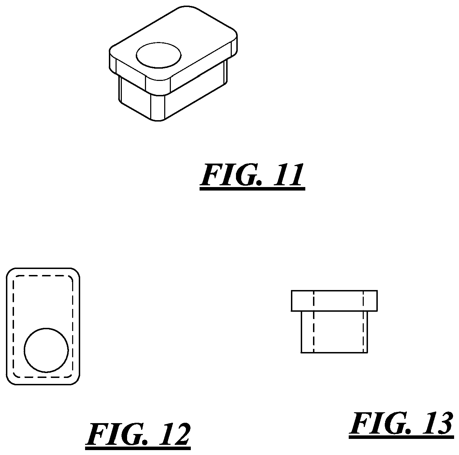

Fig. 12 is a frontal view of the insert illustrated in Fig. 11.

### Detailed Description of Various Embodiments

Although the following text sets forth a detailed description of different embodiments of the invention, it should be understood that the legal scope of the invention is defined by the words of the claims set forth at the end of this patent. The detailed description is to be construed as exemplary only and does not describe every possible embodiment of the invention since describing every possible embodiment would be impractical, if not impossible. Numerous alternative embodiments could be implemented, using either current technology or technology developed after the filing date of this patent, which would still fall within the scope of the claims defining the invention.

It should also be understood that, unless a term is expressly defined in this patent using the sentence "As used herein, the term '-' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term be limited, by implication or otherwise, to that single meaning.

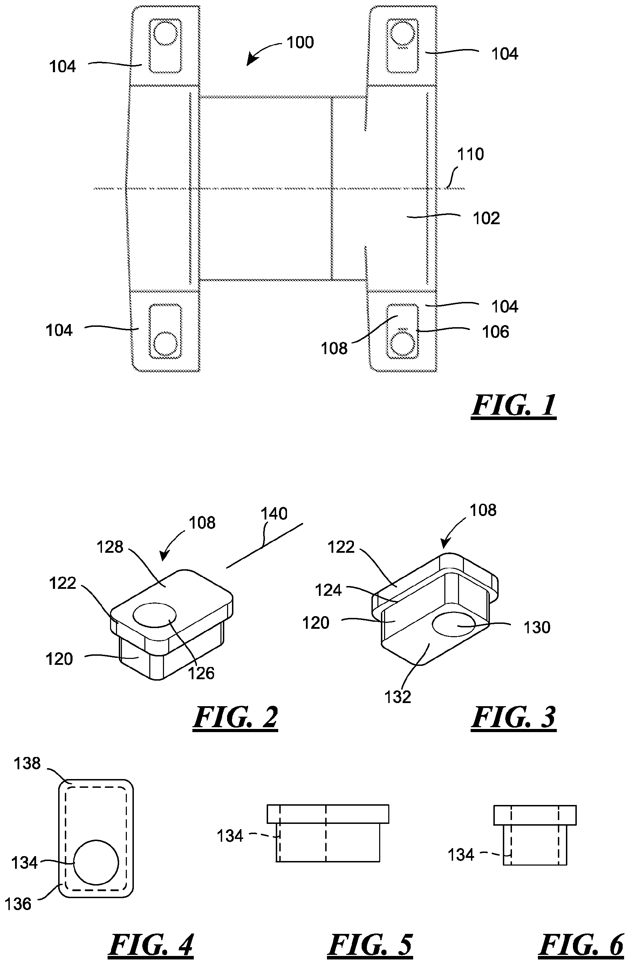

Fig. 1 illustrates a motor 100 according to the present disclosure. The motor 100 includes a motor mount 102 that is reconfigurable between at least a first configuration and a second configuration. In fact, the mount 102 may be reconfigurable between a plurality of configurations, in either a discrete or a continuous fashion.

According to certain embodiments of the present disclosure, the motor mount 102 may have one or more (i.e., at least one) reconfigurable connections or connection points by or at which the mount 102 is connected to a frame or a vibratory apparatus, such as a vibratory conveyor or feeder. The number of connections or connection points may vary between embodiments according to the present disclosure. For example, according to certain embodiments, four connections or connection points may be used, while according to other embodiments six connections or connection points may be used. Furthermore, the pattern of these connections or connection points may vary between embodiments, as explained in greater detail below.

According to the embodiment illustrated in Fig. 1, the motor mount 102 includes a plurality of reconfigurable connection points disposed about the motor mount 102. In particular, there are four connection points disposed about the periphery of the mount 102. Each connection point is defined on a separate one of four motor mount feet 104, with two feet 104 arranged on each side of the mount 102 and at each end of the mount 102. Each of the motor mount feet 104 is individually and separately reconfigurable. According to other embodiments, the mount 102 may include a single foot, or pad, arranged on each side of the mount, the foot or pad (or the connection points thereof) being individually and separately reconfigurable.

According to an embodiment of the present disclosure, each of the reconfigurable connection points disposed at one of the motor mount feet 104 includes a cavity or recess 106 in which is disposed an invertible insert 108. The insert 108 will be described in greater detail with reference to Figs. 2-6, and alternatively Figs. 11-13. By varying the orientation of the insert 108 within the cavity or recess 106, the connection points may be reconfigured between a first configuration and a second configuration.

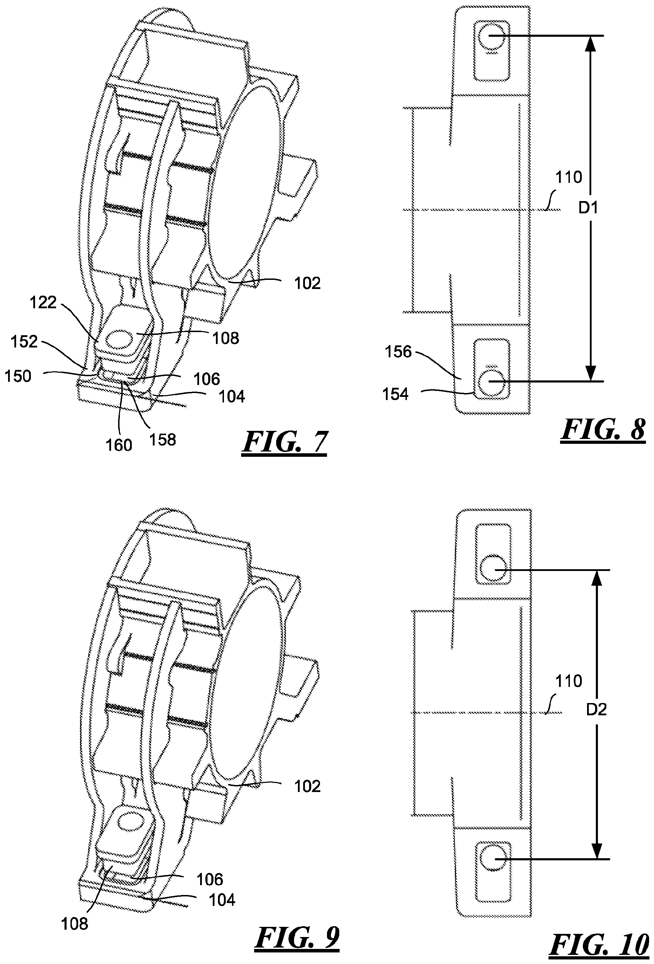

The first and second configurations of the motor mount 102 are illustrated in Figs 7-10. In particular, Figs 7 and 8 illustrate a first configuration of the connection points or the motor mount feet 104, capable of accepting or adapted to accept a first arrangement of fasteners (such as bolts, for example) connected to a frame wherein the fasteners are separated by a first distance D1 in a transverse direction relative to an longitudinal axis 110 (see Fig. 8). On the other hand, Figs 9 and 10 illustrate a second configuration of the connection points or the motor mount feet 104, capable of accepting or adapted to accept a second arrangement of fasteners connected to a frame wherein the fasteners are separated by a second distance D2 in a transverse direction relative to the longitudinal axis 110.

As will be recognized from the drawings (particularly Fig. 1), the arrangement of fasteners accommodated by the first configuration of motor mount feet 104 may be separated a distance identical to that accommodated by the second configuration of motor mount feet 104 in the longitudinal direction (i.e., along an axis parallel to the axis 110). Alternatively, the longitudinal distance separating the fasteners accommodated by the feet 102 in the first configuration may be different from the distance between the fasteners accommodated by the second configuration of motor mount feet 104. In fact, according to other embodiments of the present disclosure, the arrangement of fasteners accommodated by the first and second configurations of motor mount feet 104 may be separated by the same distance in the transverse direction relative to the longitudinal axis 110, but may vary as to their separation in the longitudinal direction. As a consequence, the reconfigurable motor mount 102 according to the present disclosure is capable of addressing a number of different possible reconfigurations, of which the disclosed configurations are but simply examples.

Turning now to Figs 2-6, an insert 108 according to the present disclosure is illustrated therein. This insert 108 is capable of being used with reconfigurable motor mount 102 illustrated in Fig. 1, as better explained with reference to Figs. 7-10. It will be understood that the insert 108 is simply an exemplary embodiment of the present disclosure, and not is in is not intended to limit the insert relative to size, shape or dimensions. For example, while the insert 108 illustrated in Figs. 2-6 has a generally rectangular geometry, it will be recognized that a similar insert could be formed with cylindrical geometry instead.

As illustrated in Fig. 2, the insert 108 includes a body 120 from which depends a flange, rim or lip 122. As a consequence, a shoulder 124 is formed at the junction of the body 120 and the flange 122. The purpose of the flange 122 and the shoulder 124 will be explained in greater detail with reference to Figs. 7-10 below.

In addition, the insert 108 includes an opening or aperture 126 in a top surface 128 (see, e.g., Fig. 2) and an opening or aperture 130 in a bottom surface 132 (see, e.g., Fig. 3). The aperture 126 and the aperture 130 are connected by a passage 134 (see Figs. 5 and 6). The apertures 126, 130 and the passage 134 may be formed in the body 120 of the insert 108 in a number of different fashions, including molding and cutting. The passage 134 is shaped to accept a fastener therethrough so as to secure the motor mount 102 to a frame from which the fastener depends. As illustrated, the insert 108 has first and second ends 136, 138, and the passage 134 is disposed closer to the first end 136 than the second end 138 of the insert 108.

As also will be recognized with reference to Figs. 2, 4, and 6, the passage 134 is centered along a longitudinal axis 140 of the insert 108 (i.e., relative to a rectangular geometry, the axis 140 is aligned with or parallel to the longer sides of the insert 108). Alternatively, the passage 134 may be offset in a transverse direction relative to the longitudinal axis 140. See Figs. 11-13. If the passage 134 is offset, then the insert 108 is capable of accommodating not only differences in the transverse distance between the fasteners, but longitudinal distances between the fasteners. This will be readily recognized by comparing the insert illustrated in Figs. 11-13 with than of Figs. 2-6.

As illustrated in Figs. 7 and 9, the insert 108 may be disposed within the cavity 106 in the foot 104. In particular, the cavity 106 may depend through the foot 104 from an aperture 150 on an upper surface 152 to an aperture 154 on a lower surface 156 (see Figs. 7 and 8). The cavity 106 may also have an inwardly directed rim 158 that defines a shoulder 160. The flange 122 of the insert 108 cooperates with the rim 158 of the cavity 106 to properly seat the insert 108 within the cavity 106. With the insert 108 fully seated within the cavity 106, the shoulder 124 of the insert 108 abuts the shoulder 160 defined by the rim 158 within the cavity 106. It will be recognized that other methods for ensuring the proper seating of the insert 10 within the cavity 106 may be substituted for that described herein.

In use, the insert 108 may be oriented either as illustrated in Figs. 7 and 8, or as illustrated in Figs. 9 and 10. With the insert 108 oriented as illustrated in Figs. 7 and 8 (i.e., with the insert 108 disposed in the cavity 106 with the first end 136 of the insert 108 aligned with a first end of the cavity 106), a fastener pattern with a transverse distance of D1 between the fasteners may be accommodated. This may be referred to as the first configuration of the reconfigurable motor mount 102. With the insert 108 oriented as illustrated in Figs. 9 and 10 (i.e., with the insert 108 disposed in the cavity 106 with the second end 138 of the insert 108 aligned with a first end of the cavity 106), a fastener pattern with a transverse distance of D2 between the fasteners may be accommodated. This may be referred to as the second configuration of the reconfigurable motor mount 102. Because of the rectangular nature of the insert 108 and the cavity 106, only two configurations may be accommodated by the illustrated embodiment, although it will be recognized according to the variations described above that other embodiments may accommodate a variety of other patterns.

## Claims

1. A reconfigurable motor mount (102) comprising:
at least one connection point that has at least a first configuration adapted to accept a first arrangement of fasteners and a second configuration adapted to accept a second arrangement of fasteners, the first and second arrangements of fasteners being different from each other;
wherein the motor mount (102) has at least one motor mount foot (104), and the at least one connection point is defined on the at least one motor mount foot (104);
wherein the at least one connection point comprises a recess (106) formed in the at least one motor mount foot (104) and an invertible insert (108) having a generally rectangular geometry disposed within the recess (106), the invertible insert (108) having either a first orientation corresponding to the first configuration or a second orientation corresponding to the second configuration.

2. The reconfigurable motor mount (102) according to claim 1, wherein the at least one connection point comprises a plurality of connection points, and the plurality of connection points are disposed about the periphery of the motor mount (102).

3. The reconfigurable motor mount (102) according to claim 1, wherein the at least one connection point comprises two connection points disposed on either side of a longitudinal axis (110) of the motor mount (102), the invertible inserts (108) on either side disposed in the respective recesses (106) in a first orientation to receive two fasteners separated by a first transverse distance and in a second orientation to receive two fasteners separated by a second transverse distance.

4. The reconfigurable motor mount (102) according to claim 3, wherein:
the insert (108) comprises a passage (134) connecting a first opening (126) in a top surface (128) of the insert (108) and a second opening (130) in a bottom surface (132) of the insert (108), the insert (108) having a longitudinal axis (140) and the passage (134) centered along the longitudinal axis (140), and
the recess (106) has a first end and a second end, and the insert (108) has a first end and a second end along the longitudinal axis (140), the passage (134) disposed closer to the first end than the second end of the insert (108), with the insert (108) disposed in the recess (106) with the first end of the insert (108) aligned with the first end of the recess (106) in the first orientation and the insert (108) disposed in the recess (106) with the second end of the insert (018) aligned with the first end of the recess (106) in the second orientation.

5. The reconfigurable motor mount (102) according to claim 1 or 3, wherein the at least one connection point comprises two connection points disposed on either end of the motor mount (102), the invertible inserts (108) on either end disposed in the recesses (106) in a first orientation to receive two fasteners separated by a first longitudinal distance and in a second orientation to receive two fasteners separated by a second longitudinal distance.

6. The reconfigurable motor mount (102) according to claim 5, wherein:
the insert (108) comprises a passage (134) connecting a first opening (126) in a top surface (128) of the insert (108) and a second opening (130) in a bottom surface (132) of the insert (108), the insert (108) having a longitudinal axis (140) and the passage offset in a transverse direction relative to the longitudinal axis (140), and
the recess (106) has a first end and a second end, and the insert (108) has a first end and a second end along the longitudinal axis (140), the passage (134) disposed closer to the first end than the second end of the insert (108), with the insert (108) disposed in the recess (106) with the first end of the insert (108) aligned with the first end of the recess (106) in the first orientation and the insert (108) disposed in the recess (106) with the second end of the insert (108) aligned with the first end of the recess (106) in the second orientation.

7. The reconfigurable motor mount (102) according to claim 1, wherein the recess (106) has an inwardly directed rim (158) that defines a recess shoulder (160), and the invertible insert (108) includes a body (120) and a flange (122) depending from the body (120) to define an insert shoulder (124) at a junction of the body (120) and the flange (122), the flange (122) cooperating with the rim (158) to seat the insert (108) within the recess (106) with the insert shoulder (124) abutting the recess shoulder (160).

8. The reconfigurable motor mount (102) according to claim 7, wherein the insert (108) comprises a passage (134) connecting a first opening (126) in a top surface (128) of the insert (108) and a second opening (130) in a bottom surface (132) of the insert (108), the insert (108) having a longitudinal axis (140) and the passage (134) centered along the longitudinal axis (140).

9. The reconfigurable motor mount (102) according to claim 7, wherein the insert (108) comprises a passage (134) connecting a first opening (126) in a top surface (128) of the insert (108) and a second opening (130) in a bottom surface (132) of the insert (108), the insert (108) having a longitudinal axis (140) and the passage (134) offset in a transverse direction relative to the longitudinal axis (140).

10. The reconfigurable motor mount (102) according to claim 8 or 9, wherein the recess (106) has a first end and a second end, and the insert (108) has a first end and a second end along the longitudinal axis (140), the passage (134) disposed closer to the first end than the second end of the insert (108), with the insert (108) disposed in the recess (106) with the first end of the insert (108) aligned with the first end of the recess (106) in the first orientation and the insert (108) disposed in the recess (106) with the second end of the insert (108) aligned with the first end of the recess (106) in the second orientation.

11. The reconfigurable motor mount (102) according to claim 10, wherein the longitudinal axis (140) of the insert (108) is aligned with the longer sides.

12. The reconfigurable motor mount (102) according to any one of claims 3 to 11, wherein the at least one connection point comprises a plurality of connection points, and the plurality of connection points are disposed about the periphery of the motor mount (102).

## Patentansprüche

1. Eine rekonfigurierbare Motorhalterung (102) umfassend:
zumindest eine Verbindungsstelle, welche zumindest eine erste Konfiguration hat, welche dazu geeignet ist, eine erste Anordnung von Befestigungsmitteln zu akzeptieren und eine zweite Konfiguration, welche dazu geeignet ist, eine zweite Anordnung von Befestigungsmitteln zu akzeptieren, wobei die erste und zweite Anordnung der Befestigungsmittel unterschiedlich voneinander sind;
wobei die Motorhalterung (102) zumindest einen Motorhalterungsfuß (104) umfasst und die zumindest eine Verbindungsstelle auf den zumindest einen Motorhalterungsfuß (104) definiert ist;
wobei die zumindest eine Verbindungsstelle eine Vertiefung (106) umfasst, welche in dem zumindest einen Motorhalterungsfuß (104) ausgebildet ist, und einen invertierbaren Einsatz (108), welcher eine im Wesentlichen rechteckige Geometrie umfasst, welcher innerhalb der Vertiefung (106) angeordnet ist, wobei der invertierbare Einsatz (108) entweder eine erste Orientierung entsprechend der ersten Konfiguration oder eine zweite Orientierung entsprechend der zweiten Konfiguration umfasst.

2. Die rekonfigurierbare Motorhalterung (102) nach Anspruch 1, wobei die zumindest eine Verbindungsstelle eine Vielzahl von Verbindungsstellen umfasst und die Vielzahl von Verbindungsstellen bei der Peripherie der Motorhalterung (102) angeordnet ist.

3. Die rekonfigurierbare Motorhalterung (102) nach Anspruch 1, wobei die zumindest eine Verbindungsstelle zwei Verbindungsstellen umfasst, welche beidseits einer longitudinalen Achse (110) der Motorhalterung (102) angeordnet sind, wobei die invertierbaren Einsätze (108) beidseits angeordnet sind in den entsprechenden Vertiefungen (106) in einer ersten Orientierung, um zwei Befestigungsmittel zu empfangen, welche durch eine erste transversale Distanz getrennt sind und in einer zweiten Orientierung, um zwei Befestigungsmittel zu empfangen, welche durch eine zweite transversale Distanz getrennt sind.

4. Die rekonfigurierbare Motorhalterung (102) nach Anspruch 3, wobei:
der Einsatz (108) eine Passage (134) umfasst, welche eine erste Öffnung (126) in einer oberen Oberfläche (128) des Einsatzes (108) und eine zweite Öffnung (130) in einer unteren Oberfläche (132) des Einsatzes (108) umfasst, wobei der Einsatz (108) eine longitudinale Achse (140) umfasst und die Passage (134) entlang der longitudinalen Achse (140) zentriert ist, und
die Vertiefung (106) ein erstes Ende und ein zweites Ende umfasst und der Einsatz (108) ein erstes Ende und ein zweites Ende entlang der longitudinalen Achse (140) umfasst, die Passage (134) näher zu dem ersten Ende als zu dem zweiten Ende des Einsatzes (108) angeordnet ist, mit dem Einsatz (108), welcher in der Vertiefung (106) angeordnet ist, mit dem ersten Ende des Einsatzes (108) mit dem ersten Ende der Vertiefung (106) in der ersten Orientierung ausgerichtet ist und der Einsatz (108), welcher in der Vertiefung (106) angeordnet ist, mit dem zweiten Ende des Einsatzes (018) mit dem ersten Ende der Vertiefung (106) in der zweiten Orientierung ausgerichtet ist.

5. Die rekonfigurierbare Motorhalterung (102) nach dem Anspruch 1 oder 3, wobei die zumindest eine Verbindungsstelle zwei Verbindungsstellen umfasst, welche an jedem Ende der Motorhalterung (102) angeordnet sind, wobei die invertierbaren Einsätze (108) an jedem Ende in den Vertiefungen (106) in einer ersten Orientierung angeordnet sind, um zwei Befestigungsmittel zu empfangen, welche durch eine erste longitudinale Distanz getrennt sind und in einer zweiten Orientierung, um zwei Befestigungsmittel zu empfangen, welche durch eine zweite longitudinale Distanz getrennt sind.

6. Rekonfigurierbare Motorhalterung (102) nach Anspruch 5, wobei:
der Einsatz (108) eine Passage (134) umfasst, welche eine erste Öffnung (126) in einer oberen Oberfläche (128) des Einsatzes (108) umfasst und eine zweite Öffnung (130) in einer unteren Oberfläche (132) des Einsatzes (108), wobei der Einsatz (108) eine longitudinale Achse (140) umfasst und die Passage in einer transversalen Richtung relativ zu der longitudinalen Achse (140) versetzt ist, und
die Vertiefung (106) ein erstes und ein zweites Ende umfasst, und der Einsatz (108) ein erstes Ende und ein zweites Ende entlang der longitudinalen Achse (140) umfasst, die Passage (134) näher zu dem ersten Ende als zu dem zweiten Ende des Einsatzes (108) angeordnet ist, mit dem Einsatz (108), welcher in der Vertiefung (106) angeordnet ist, mit dem ersten Ende des Einsatzes (108) mit dem ersten Ende der Vertiefung (106) in der ersten Orientierung ausgerichtet ist und der Einsatz (108), welcher in der Vertiefung (106) angeordnet ist, mit dem zweiten Ende des Einsatzes (108) mit dem ersten Ende der Vertiefung (106) in der zweiten Orientierung ausgerichtet ist.

7. Die rekonfigurierbare Motorhalterung (102) nach Anspruch 1, wobei die Vertiefung (106) einen nach innen gerichteten Rand (158) umfasst, welcher eine Vertiefungsschulter (160) definiert und der invertierbare Einsatz (108) einen Körper (120) und einen Flansch (122) abhängig von dem Körper (120) beinhaltet, um eine Einsatzschulter (124) bei einer Verbindung des Körpers (120) und dem Flansch (122) zu definieren, wobei der Flansch (122) mit den Rand (158) kooperiert, um den Einsatz (108) in die Vertiefung (106) mit der Einsatzschulter (124), welche an die Vertiefungsschulter (160) grenzt, zu setzen.

8. Die rekonfigurierbare Motorhalterung (102) nach Anspruch 7, wobei der Einsatz (108) eine Passage (134) umfasst, welche eine erste Öffnung (126) in einer oberen Oberfläche (128) des Einsatzes (108) und eine zweite Öffnung (130) in einer unteren Oberfläche (132) des Einsatzes (108) verbindet, wobei der Einsatz (108) eine longitudinale Achse (140) umfasst und die Passage (134) entlang der longitudinalen Achse (140) zentriert ist.

9. Die rekonfigurierbare Motorhalterung (102) nach Anspruch 7, wobei der Einsatz (108) eine Passage (134) umfasst, welche eine erste Öffnung (126) in einer oberen Oberfläche (128) des Einsatzes (108) und eine zweite Öffnung (130) in einer unteren Oberfläche (132) des Einsatzes (108) verbindet, wobei der Einsatz (108) eine longitudinale Achse (140) umfasst und die Passage (134) in einer transversalen Richtung relativ zu der longitudinalen Achse (140) versetzt ist.

10. Die rekonfigurierbare Motorhalterung (102) nach Anspruch 8 oder 9, wobei die Vertiefung (106) ein erstes Ende und ein zweites Ende umfasst, und der Einsatz (108) ein erstes Ende und ein zweites Ende entlang der longitudinalen Achse (140) umfasst, die Passage (134) näher zu dem ersten Ende als zu dem zweiten Ende des Einsatzes (108) angeordnet ist, mit dem Einsatz (108), welcher in der Vertiefung (106) angeordnet ist, mit dem ersten Ende des Einsatzes (108) mit dem ersten Ende der Vertiefung (106) in der ersten Orientierung ausgerichtet ist und der Einsatz (108), welcher in der Vertiefung (106) angeordnet ist, mit dem zweiten Ende des Einsatzes (108) mit dem ersten Ende der Vertiefung (106) in der zweiten Orientierung ausgerichtet ist.

11. Rekonfigurierbare Motorhalterung (102) nach Anspruch 10, wobei die longitudinale Achse (140) des Einsatzes (108) mit den längeren Seiten ausgerichtet ist.

12. Rekonfigurierbare Motorhalterung (102) nach einem der Ansprüche 3-11, wobei die zumindest eine Verbindungsstelle eine Vielzahl von Verbindungsstellen umfasst und die Vielzahl von Verbindungsstellen bei der Peripherie der Motorhalterung (102) angeordnet ist.

## Revendications

1. Une monture de moteur reconfigurable (102) comprenant :
au moins un point de liaison qui présente au moins une première configuration adaptée pour recevoir un premier agencement de fixations et une seconde configuration adaptée pour recevoir un second agencement de fixations, le premier et le second agencement de fixations étant différents l'un de l'autre ;
dans lequel la monture de moteur (102) possède au moins un pied de monture de moteur (104), et le au moins un point de liaison est défini sur le au moins un pied de monture de moteur (104) ;
dans lequel le au moins un point de liaison comprend un évidement (106) formé dans le au moins un pied de monture de moteur (104) et un insert permutable (108) présentant une géométrie généralement rectangulaire disposée à l'intérieur de l'évidement (106), l'insert permutable (108) présentant soit une première orientation correspondant à la première configuration soit une seconde orientation correspondant à la seconde configuration.

2. La monture de moteur reconfigurable (102) selon la revendication 1, dans laquelle le au moins un point de liaison comprend une pluralité de points de liaison, et la pluralité de points de liaison sont disposés autour de la périphérie de la monture de moteur (102).

3. La monture de moteur reconfigurable (102) selon la revendication 1, dans laquelle au moins un point de connexion comprend deux points de connexion disposés sur l'un et l'autre côté d'un axe longitudinal (110) de la monture de moteur (102), les inserts permutables (108) de chaque côté étant disposés dans les évidements respectifs (106) avec une première orientation pour recevoir deux fixations séparées d'une première distance transversale et dans une seconde orientation pour recevoir deux fixations séparées d'une seconde distance transversale.

4. La monture de moteur reconfigurable (102) selon la revendication 3, dans laquelle :
l'insert (108) comprend un passage (134) reliant une première ouverture (126) dans une surface supérieure (128) de l'insert (108) et une seconde ouverture (130) dans une surface inférieure (132) de l'insert (108), l'insert (108) possédant un axe longitudinal (140) et le passage (134) étant centré le long de l'axe longitudinal (140), et
l'évidement (106) possède une première extrémité et une seconde extrémité, et l'insert (108) présente une première extrémité et une seconde extrémité le long de l'axe longitudinal (140), le passage (134) étant disposé plus proche de la première extrémité que de la seconde extrémité de l'insert (108), avec l'insert (108) disposé dans l'évidement (106) avec la première extrémité de l'insert (108) alignée avec la première extrémité de l'évidement (106) dans la première orientation et l'insert (108) étant disposé dans l'évidement (106) avec la seconde extrémité de l'insert (108) alignée avec la première extrémité de l'évidement (106) dans la seconde orientation.

5. La monture de moteur reconfigurable (102) selon la revendication 1 ou 3, dans laquelle le au moins un point de liaison comprend deux points de liaison disposés sur l'une et l'autre extrémités de la monture de moteur (102), les inserts permutables (108) sur l'une et l'autre extrémité étant disposés dans les évidements (106) dans une première orientation pour recevoir deux fixations séparées d'une première distance longitudinale et dans une seconde orientation pour recevoir deux fixations séparées d'une seconde distance longitudinale.

6. La monture de moteur reconfigurable (102) selon la revendication 5, dans laquelle :
l'insert (108) comprend un passage (134) reliant une première ouverture (126) dans une surface supérieure (128) de l'insert (108) et une seconde ouverture (130) dans une surface inférieure (132) de l'insert (108), l'insert (108) possédant un axe longitudinal (140) et le passage étant décalé dans une direction transversale par rapport à l'axe longitudinal (140), et
l'évidement (106) possède une première extrémité et une seconde extrémité, et l'insert (108) possède une première extrémité et une seconde extrémité le long de l'axe longitudinal (140), le passage (134) étant disposé plus proche de la première extrémité que la seconde extrémité de l'insert (108), avec l'insert (108) disposé dans l'évidement (106) avec la première extrémité de l'insert (108) alignée avec la première extrémité de l'évidement (106) dans la première orientation et l'insert (108) est disposé dans l'évidement (106) avec la seconde extrémité de l'insert (108) alignée avec la première extrémité de l'évidement (106) dans la seconde orientation.

7. La monture de moteur reconfigurable (102) selon la revendication 1, dans laquelle l'évidement (106) possède une bague dirigée vers l'intérieur (158) qui définit un épaulement d'évidement (160), et l'insert permutable (108) comprend un corps (120) et un flasque (122) s'étendant à partir du corps (120) pour définir un épaulement d'insert (124) au niveau d'une jonction du corps (120) et du flasque (122), le flasque (122) coopérant avec la bague (158) pour loger l'insert (108) à l'intérieur de l'évidement (106) avec l'épaulement d'insert (124) venant en butée contre l'épaulement d'évidement (160).

8. La monture de moteur reconfigurable (102) selon la revendication 7, dans laquelle l'insert (108) comprend un passage (134) reliant une première ouverture (126) dans une surface supérieure (128) de l'insert (108) et une seconde ouverture (130) dans une surface inférieure (132) de l'insert (108), l'insert (108) possédant un axe longitudinal (140) et le passage (134) étant centré le long de l'axe longitudinal (140).

9. La monture de moteur reconfigurable (102) selon la revendication 7, dans laquelle l'insert (108) comprend un passage (134) connectant une première ouverture (126) dans une surface supérieure (128) de l'insert (108) et une seconde ouverture (130) dans une surface inférieure (132) de l'insert (108), l'insert (108) possédant un axe longitudinal (140) et le passage (134) étant décalé dans une direction transversale par rapport à l'axe longitudinal (140).

10. La monture de moteur reconfigurable (102) selon la revendication 8 ou 9, dans laquelle l'évidement (106) possède une première extrémité et une seconde extrémité, et l'insert (108) possède une première extrémité et une seconde extrémité le long de l'axe longitudinal (140), le passage (134) étant disposé plus proche de la première extrémité que de la seconde extrémité de l'insert (108), avec l'insert (108) disposé dans l'évidement (106) avec la première extrémité de l'insert (108) alignée avec la première extrémité de l'évidement (106) dans la première orientation et l'insert (108) disposé dans l'évidement (106) avec la seconde extrémité de l'insert (108) alignée avec la première extrémité de l'évidement (106) dans la seconde orientation.

11. La monture de moteur reconfigurable (102) selon la revendication 10, dans laquelle l'axe longitudinal (140) de l'insert (108) est aligné sur les côtés les plus longs.

12. La monture de moteur reconfigurable (102) selon l'une des revendications 3 à 11, dans laquelle au moins un point de liaison comprend une pluralité de points de liaison, et la pluralité de points de liaison sont disposés autour de la périphérie de la monture de moteur (102).
